# EUROPEAN PATENT APPLICATION

(11) **EP 4 488 237 A2**
(43) Date of publication of application: **08.01.2025**
(21) Application number: 24175991.9
(22) Date of filing: 15.05.2024
(51) Int. Cl.: C02F 1/00, C25B 1/04, C25B 15/08, C02F 1/28, C02F 1/461, C02F 1/469, C02F 103/04

(54) **APPARATUS AND PROCESS TO CONTROL PROVIDING OF ELECTROLYZER WATER FOR HYDROGEN PRODUCTION**

(30) Priority: 18.05.2023 US 202318198872
(71) Applicant: Air Products and Chemicals, Inc., Allentown, PA 18106 (US)
(72) Inventor: WILSON, Graeme Richard, Surbiton, KT5 8JY (GB); CONWAY, Timothy Edward, Allentown, 18103 (US); AKHURST, Matthew William, 3055NA Rotterdam (NL); LESLIE, Fiona Victoria, 018980 Singapore (SG)
(74) Representative: Beck Greener LLP

(57) **Abstract**

An apparatus to purify water and provide the purified water to one or more electrolyzers for manufacture of hydrogen can include a water purification unit positioned to receive water from a demineralization unit to purify the water and output the purified water to at least one electrolyzer of an electrolyzer house. The flow of water can be adjusted to maintain a minimum flow of water passing through one or more beds of a polisher while accounting for the demand of water at the electrolyzers. Flow adjustments can be made between providing all the purified water to the electrolyzers during high demand operations to other configurations in which little or no purified water is fed to the electrolyzers and, instead, that water is recycled back to the water purification unit.

## Description

The present innovation relates to providing purified water for use as a feed to electrolyzers of one or more electrolyzer houses for hydrogen production. Some embodiments can be utilized in conjunction with green hydrogen and green ammonia production that may utilize renewable power sources for production of hydrogen and ammonia.

Green ammonia manufacturing can be provided so that ammonia is made by use of electricity from renewable power sources (e.g., solar power, wind power). Examples of ammonia production that can be provided from renewable power sources can be appreciated from EP3957772A1, for example.

Hydrogen production can be provided by use of one or more electrolyzers. The electrolyzers can produce hydrogen from water *via* electrolysis. An example of a system for production of hydrogen can be appreciated from US 2022/0290309. Hydrogen production from water that relies on renewable power sources to power operation of various production units can be considered green hydrogen manufacturing.

The Inventors determined that a new process and apparatus for controlling the providing of purified water can be provided to facilitate improvements over conventional systems that often utilize continual recycling of water to account for operational demands of purified water electrolyzers may have. For example, embodiments can be configured for controlling the providing of purified water to electrolyzers used for hydrogen production to provide greater operational flexibility, better adaptability to changing demand of purified water that can fluctuate greatly due to renewable energy availability, and reduced pumping and water demineralization processing duties. Embodiments can be configured to utilize a water flow control scheme that can permit greater accuracy of determining electrolyzer demand for water and more accurate adjustment to flow demand for wide operational fluctuations that may occur (*e.g.,* demand for water varying due to electrolyzer(s) adjusting operation from 0% capacity to 100% capacity due to renewable energy availability, *etc.*). Embodiments can also be configured to permit lower cost piping installations that can be easier to install during construction or retrofitting (*e.g.,* require use of less specialized welding and welding techniques, less flanged connections, *etc*.) as well as reducing the likelihood of water contamination of purified water during the transport of the water *via* piping to electrolyzers.

Some embodiments can be adapted so that a polisher for purifying demineralized water to a pre-selected electrolyzer feed purification level can be output to accommodate electrolyzer demand while also maintaining a pre-defined minimum flow of water through the polisher to maintain polisher bed functionality and avoid polisher bed degradation (*e.g.,* from agglomeration of the bed material, channeling that can be formed in the bed material, *etc*.)*.* Embodiments can be adapted so purified water output from the polisher can be fed entirely to one or more electrolyzers of an electrolyzer house when demand is at a first pre-defined level. Embodiments can also be adapted so that the purified water output from the polisher can be split so a first portion is fed to the electrolyzers of the electrolyzer house and a second portion bypasses the electrolyzer house and is recycled back to the polisher or a water purification unit having the polisher in response to detecting that the one or more electrolyzers of the electrolyzer house has a demand for water that is at a second pre-defined level that is lower than the first pre-defined level. Embodiments can also be adapted so that the purified water output from the polisher can be split so a first portion is fed to the electrolyzer house to bypass the electrolyzers for being recycled back to the polisher or purification unit while also maintaining a pressure head for the feeding of water to the electrolyzers and a second portion bypasses the electrolyzer house and is recycled back to the water purification unit or the polisher of that unit in response to detecting that the one or more electrolyzers of the electrolyzer house has a demand for water that is at a third pre-defined level that is lower than the second pre-defined level and is also lower than the first pre-defined level. In some situations, the entirety of the purified water can simply bypass the electrolyzer house and be recycled back to the polisher or purification unit when there is no need for a flow of water to pass through the electrolyzer house while bypassing electrolyzers to maintain a pressure head for the electrolyzer house.

Embodiments can be adapted to include a purified water control system that can monitor electrolyzer demand and adjust water flow to the polisher and/or to the electrolyzer house accordingly to account for the demand for water being within one of the different pre-selected demand levels. In some embodiments, the flow of water can be controlled so that the water fed to the polisher for purification is always at least fed at a pre-selected minimum velocity and also does not exceed a pre-selected maximum velocity. A pre-selected minimum velocity can be, for example, 0.6 metres per second (m/s) or other suitable minimum velocity value and the pre-selected maximum velocity can be, for example, 3.5 m/s, a value that is less than 4 m/s, a value that is between 3.4 m/s and 4 m/s (*e.g.,* in a range from 3.4 m/s to 4 m/s), or other suitable maximum velocity setting.

In some configurations, the water purification unit having the polisher can also have other water purification elements (*e.g.,* a deionization unit (DI), an electrical deionization unit (EDI), *etc*.)*.* Also, the purification unit can be positioned so it is substantially close to the electrolyzer house and remote from a water demineralization unit. For example, embodiments can be configured so that of the overall conduit piping distance for feeding water from the demineralization unit to the electrolyzer house, at least 60%, at least 70% or between 70% and 80% (*e.g.,* from 70% to 80%) of the overall piping distance is between the purification unit and the water demineralization unit and the remaining 40% to 20% of the piping is between the purification unit and the electrolyzers of the electrolyzer house. The piping can be provided so that there is 4 times more piping distance between the purification unit and the water demineralization unit as compared to the piping distance between the purification unit and the electrolyzer house. In other embodiments, the piping can be provided so that there is a ratio of between 4:1 and 3:2 (*e.g.,* in a range from 4:1 to 3:2) of piping distance between the purification unit and the water demineralization unit as compared to the piping distance between the purification unit and the electrolyzer house. As a non-limiting example, 800 meters of piping can be between the purification unit and the water demineralization unit to feed water from the demineralization unit to the purification unit and 200 meters of piping can be between the purification unit and the electrolyzer house for providing purified water from the purification unit to the electrolyzer house to provide a ratio of 4:1 of piping distance between the purification unit and the water demineralization unit as compared to the piping distance between the purification unit and the electrolyzer house.

Embodiments of our apparatus and process can also be configured so that there are numerous different electrolyzer houses that are each supplied water from a central demineralization unit. Each electrolyzer house can be a component of an electrolyzer assembly with water purification unit such that each electrolyzer house having multiple electrolyzers has its own local purification unit that can include a polisher as well as other purification elements (*e.g.,* EDI, DI, *etc.*)*.* Such an arrangement can permit a large quantity of the piping utilized for the supplying of water to the electrolyzers to utilize less specialized, and less expensive piping (*e.g.,* stainless steel piping, grade 316 stainless steel piping, *etc*.) because the water is purified at a position closer to the electrolyzer house(s) *via* their different purification units and higher cost piping (*e.g.,* glass reinforced plastic lined polypropylene piping, *etc.*) that can be necessary for supplying high purity water to the electrolyzers may only be needed for the conduits for water transport that extend from the polisher to the electrolyzers. Embodiments of our process and apparatus can permit a significant reduction in need of high-cost, specialized piping that is designed for highly purified water flows to avoid contamination of that high purity water as it is passed to electrolyzers for undergoing electrolysis, which can permit substantive cost savings in piping that reduces capital costs as well as ongoing maintenance and repair costs. This piping arrangement can also permit piping installations to be easier to install or construction. Moreover, the reduced distance of high quality piping for purified water can reduce the risk of contamination of purified water passing through such piping due to a piping failure or leak *etc.* as the overall amount of piping distance through which purified water travels can be greatly reduced.

In a first aspect, an apparatus for controlling purified water for hydrogen production is provided. The apparatus can include a purification unit positioned to purify a feed of water from a water demineralization unit for outputting a purified feed of water having a pre-selected level of purity for feeding to electrolyzers of an electrolyzer house for generation of hydrogen *via* electrolysis. The purification unit can be positioned and arranged such that a first portion of the purified feed of water outputtable from the purification unit is feedable to the electrolyzers and a second portion of the purified feed of water is outputtable to a recycle conduit to bypass the electrolyzer house and feed the second portion of the purified feed of water to the water purification unit. The apparatus can also include a water purification control system configured to determine a demand for purified water at the electrolyzers and adjust a proportion of the purified feed of water output from the purification unit that is included in the first portion of the purified feed of water and adjust a proportion of the purified feed of water output from the purification unit that is included in the second portion of the purified feed of water so sufficient purified water is fed to the electrolyzers to meet the determined demand for the purified water.

In a second aspect, the apparatus can be provided so that the water purification unit comprises a deionization unit positioned to deionize the feed of water and a polisher that is downstream of the deionization unit to receive deionized water from the deionization unit to form the purified water having the pre-selected level of purity.

In a third aspect, the apparatus can include an electrolyzer house feed conduit connected between the electrolyzers and the polisher to receive the first portion of the purified feed of water and a recycle conduit connected between the water purification unit and the electrolyzer house to receive the second portion of the purified feed of water to bypass the electrolyzer house and feed the second portion to the water purification unit.

Embodiments can be provided so that the different conduits can include adjustable valves. Such valves can be communicatively connected to a controller of the water purification control system for being actuated to adjust how the flow of purified water is routed.

In a fourth aspect, the apparatus can include a pressure head maintenance bypass conduit connected to the recycle conduit so that a portion of the first portion of the purified feed is passable to the water purification unit after bypassing the electrolyzers to maintain a pressure head for the electrolyzers.

In a fifth aspect, the apparatus can be provided so that the water purification system is configured so that a proportion of the purified feed of water output from the polisher that is included in the first portion of the purified feed of water and a proportion of the purified feed of water output from the polisher that is included in the second portion of the purified feed of water are adjusted so that a flow of water passed through the polisher is at or above a pre-selected minimum flow and the flow of water passed through the polisher is at or below a pre-selected maximum flow while also feeding sufficient purified water to the electrolyzers to meet the determined demand for the purified water.

In some embodiments, the apparatus can include an electrolyzer house feed conduit connected between the electrolyzers and the polisher to receive the first portion of the purified feed of water. The water purification control system can also include a controller, a sensor positioned to detect a flow rate or velocity of purified water fed to the electrolyzer house that is communicatively connectable to the controller, a recycle conduit sensor positioned to detect a flow rate or velocity of purified water passed through the recycle conduit, and a purification unit feed conduit sensor positioned to detect a flow rate or velocity of water fed to the purification unit for purification.

In some implementations, the pre-selected minimum flow can be a velocity of 0.6 m/s and the pre-selected maximum flow is a velocity that is no greater than 4 m/s (*e.g.,* is between 3.5 m/s and 4 m/s (*e.g.,* in a range from 3.5 m/s to 4 m/s), or is another pre-selected maximum velocity that is below 4 m/s and is also above the pre-selected minimum flow).

In a sixth aspect, the apparatus can also include the electrolyzer house and the electrolyzers of the electrolyzer house.

In a seventh aspect, the purification unit can be positioned such that piping for feeding the water from the water demineralization unit to the electrolyzer house is arranged so that there is a ratio of between 4:1 and 3:2 (*e.g.,* in a range from 4:1 to 3:2) of a piping distance between the purification unit and the water demineralization unit as compared to a piping distance between the purification unit and the electrolyzer house.

In some embodiments, the piping between the purification unit and the water demineralization unit can be a first piping having a first pre-selected quality level and the piping between the purification unit and the electrolyzer house for feeding the purified water to the electrolyzers can be a second piping having a second pre-selected quality level. For example, the first piping can be stainless steel piping and the second piping can be a lined piping adapted to protect the purity of water passing through the second piping (*e.g.,* glass reinforced plastic lined polypropylene piping).

In an eighth aspect, the apparatus can include multiple units. For example, the purification unit can be a first purification unit, the feed of water can be a first feed of water, the purified feed of water can be a first purified feed of water, the electrolyzers can be first electrolyzers and the electrolyzer house can be a first electrolyzer house, and the recycle conduit can be a first recycle conduit. The apparatus can also include a second purification unit positioned to purify a second feed of water from the water demineralization unit for outputting a second purified feed of water having the pre-selected level of purity for feeding to second electrolyzers of a second electrolyzer house for generation of hydrogen *via* electrolysis. The second purification unit can be positioned and arranged such that a first portion of the second purified feed of water outputtable from the second purification unit is feedable to the second electrolyzers and a second portion of the second purified feed of water is outputtable to a second recycle conduit to bypass the second electrolyzer house and feed the second portion of the second purified feed of water to the second water purification unit.

In a ninth aspect, the apparatus of the first aspect can include one or more features of the second aspect, third aspect, fourth aspect, fifth aspect, sixth aspect, seventh aspect, and/or eighth aspect. It should therefore be appreciated that the apparatus can also include numerous other combinations of features. Such an example of a combination of such features can be appreciated from the discussion of exemplary embodiments provided herein.

In a tenth aspect, a process to control providing of purified water for hydrogen production is provided. Any of the above discussed embodiments of our apparatus can be configured to implement an embodiment of such a process. The process can include feeding water to a purification unit for purification of the water to form purified water for feeding to electrolyzers of an electrolyzer house for formation of hydrogen from the purified water *via* electrolysis. The process can also include determining electrolyzer demand for the purified water so that (i) in response to detection of a first pre-selected level of electrolyzer demand for the purified water, an entirety of the purified water output from a polisher of the purification unit is fed to the electrolyzer house for feeding to the electrolyzers, (ii) in response to detection of a second pre-selected level of electrolyzer demand for the purified water, a first portion of the purified water output from the polisher is fed to the electrolyzer house for feeding to the electrolyzers and a second portion of the purified water output from the polisher is fed to a recycle conduit to feed the purified water to the purification unit, and (iii) in response to detection of a third pre-selected level of electrolyzer demand for the purified water, the purified water output from the polisher is fed to the purification unit such that the purified water bypasses the electrolyzers.

In an eleventh aspect, the passing of the purified water output from the polisher to the purification unit such that the purified water bypasses the electrolyzers can include passing at least a portion of the purified water output from the polisher to the recycle conduit to feed the purified water to the purification unit.

In a twelfth aspect, the passing of the purified water output from the polisher to the purification unit such that the purified water bypasses the electrolyzers can include (a) passing a first portion of the purified water output from the polisher to an electrolyzer house feed conduit for maintaining a pressure head for feeding water to the electrolyzers and being recycled back to the purification unit and (b) passing a second portion of the purified water output from the polisher to recycle conduit to feed the second portion of the purified water to the purification unit.

In a thirteenth aspect, the process can include forming hydrogen from the purified water fed to the electrolyzers *via* electrolysis.

In a fourteenth aspect, the determining of the electrolyzer demand for the purified water can be based on one or more of: (i) loading feedback from the electrolyzers, (ii) a flow rate or velocity of purified water detected by a sensor of the recycle conduit, (iii) a flow rate or velocity of water being fed to the polisher detected by a purification unit sensor, (iv) a flow rate or velocity of water being passed through an electrolyzer house feed conduit for feeding to the electrolyzers detected by an electrolyzer house feed conduit sensor, and (v) piping size changes within a header of the electrolyzer house feed conduit. For example, all of conditions (i) through (v) can be utilized, only one of these conditions can be utilized, or a combination of two or more of these conditions can be utilized. Any combination of these conditions (i) through (v) can be utilized in a particular embodiment.

In a fifteenth aspect, the process can include adjusting a flow of water being fed to the polisher in response to the determined electrolyzer demand for the purified water.

In a sixteenth aspect, the process of the tenth aspect can be combined with one or more features of the eleventh aspect, twelfth aspect, thirteenth aspect, fourteenth aspect, and/or fifteenth aspect. It should therefore be appreciated that the process can also include numerous other combinations of features. Such an example of a combination of such features can be appreciated from the discussion of exemplary embodiments provided herein. Embodiments can also be adapted to be implemented *via* an embodiment of the apparatus as discussed herein and can therefore include elements of the apparatus as well.

In a seventeenth aspect, a process to control providing electrolyzer water for hydrogen production is provided that can include feeding water having a first pre-selected level of purity from a water demineralization unit to a plurality of purification units *via* first piping have a first pre-selected quality level for the water having the first pre-selected level of purity, feeding purified water having a second pre-selected level of purity from the purification units to electrolyzers of electrolyzer houses *via* second piping having a second pre-selected quality level for the purified water having the second pre-selected level of purity, and controlling the feeding of the purified water having the second pre-selected level of purity to account for a determined electrolyzer water demand of the electrolyzers of the electrolyzer houses.

In some embodiments, the first piping can be stainless steel piping and the second piping can be a lined piping adapted to protect the purity of water passing through the second piping (*e.g.,* glass reinforced plastic lined polypropylene piping).

In an eighteenth aspect, the process of the seventeenth aspect can also include recycling a portion of the purified water having the second pre-selected level of purity output from the purification units to the purification units *via* recycle conduit arrangements so that the recycled portion of the purified water bypasses the electrolyzers of the electrolyzer houses.

In a nineteenth aspect, the process of the seventeenth aspect can also include operating the electrolyzers to form hydrogen from the purified water having the second pre-selected level of purity *via* electrolysis.

In a twentieth aspect, the process of the seventeenth aspect can be combined with one or more features of the eighteenth aspect and/or nineteenth aspect. It should therefore be appreciated that the process of the seventeenth aspect can also include numerous other combinations of features. Such an example of a combination of such features can be appreciated from the discussion of exemplary embodiments provided herein. Embodiments of the process of the seventeenth aspect can also be implemented *via* an embodiment of the apparatus as discussed herein and can also include use of elements of the apparatus.

It should be appreciated that embodiments of the process and apparatus can utilize various conduit arrangements and process control elements. For example, some embodiments can utilize an automated process control system and/or a distributed control system (DCS), for example. As another example, embodiments may utilize sensors (*e.g.,* pressure sensors, temperature sensors, flow rate sensors, concentration sensors, *etc*.)*,* controllers, valves, piping, and other process control elements. Various different conduit arrangements and process control systems can be utilized to meet a particular set of design criteria.

Other details, objects, and advantages of our process for controlling the providing of purified water for hydrogen production, an apparatus to control the providing of electrolyzer water for hydrogen production, a system for controlling the providing of purified water for hydrogen production, and methods of making and using the same will become apparent as the following description of certain exemplary embodiments thereof proceeds.

Exemplary embodiments of our process to control the providing of purified water for hydrogen production, apparatus to control the purifying of water and providing of purified water for hydrogen production, system for controlling the purifying of water and providing of the purified water for hydrogen production, and methods of making and using the same are shown in the drawings included herewith. It should be understood that like reference characters used in the drawings may identify like components.

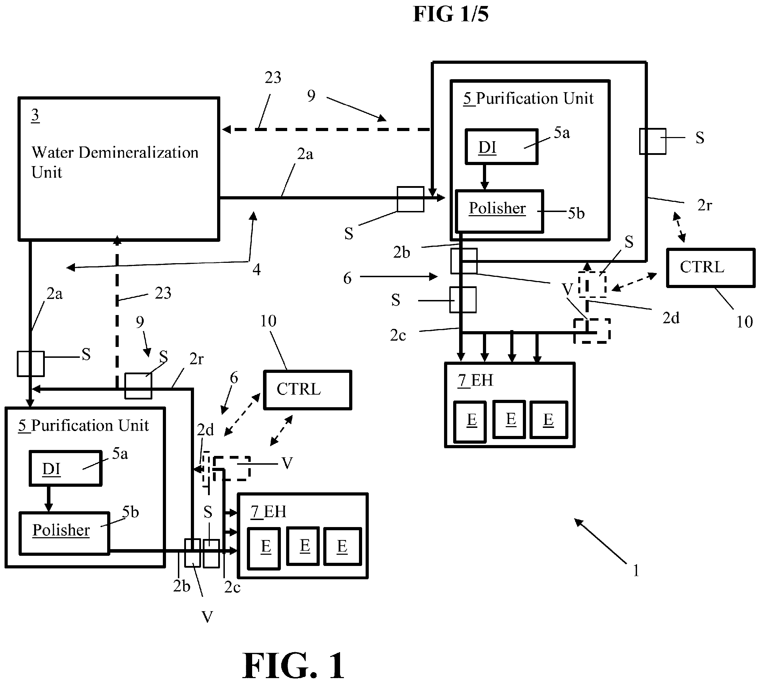

Figure 1 is a schematic block diagram of a first exemplary embodiment of an apparatus 1 to control the purification of water and providing of electrolyzer water for hydrogen production. The schematic diagram of Figure 1 also illustrates an exemplary processes for controlling the providing of purified water for hydrogen production and purifying water to provide electrolyzer water for hydrogen production.

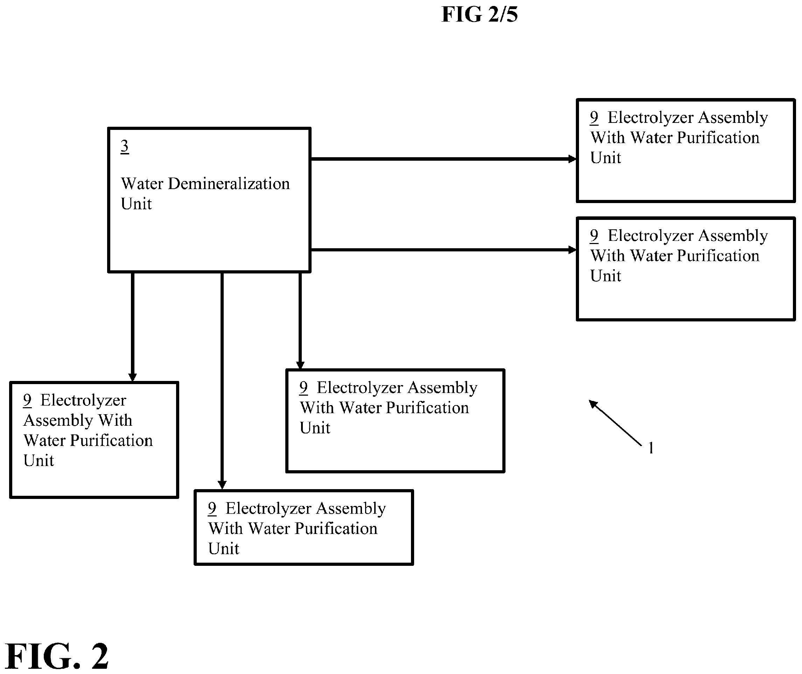

Figure 2 is a schematic block diagram of a second exemplary embodiment of an apparatus 1 to control purification of water and control the providing of electrolyzer water for hydrogen production. The schematic diagram of Figure 2 also illustrates an exemplary processes for controlling the providing of purified water for hydrogen production and purifying water to provide electrolyzer water for hydrogen production.

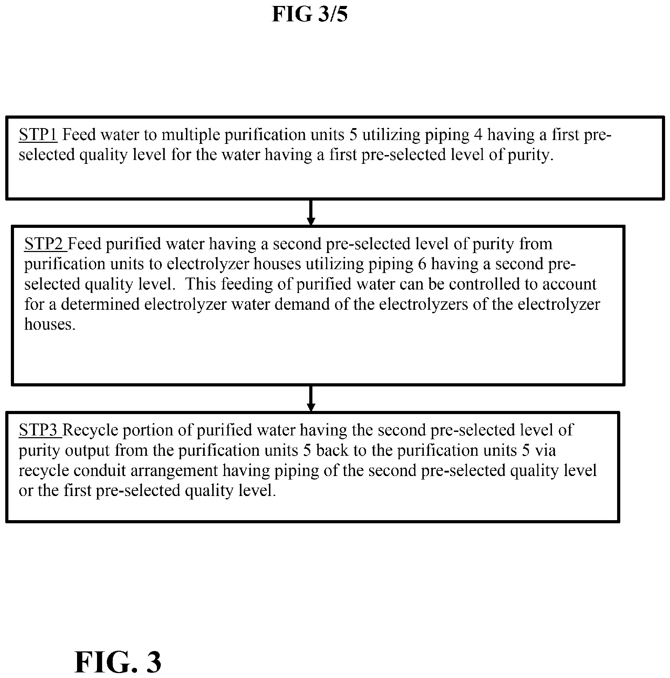

Figure 3 is a flow chart of a first exemplary process for controlling the purifying of water and providing of purified water to electrolyzers for hydrogen production. Embodiments of our apparatus shown in Figures 1 and 2 can be configured to implement this first exemplary embodiment of this process.

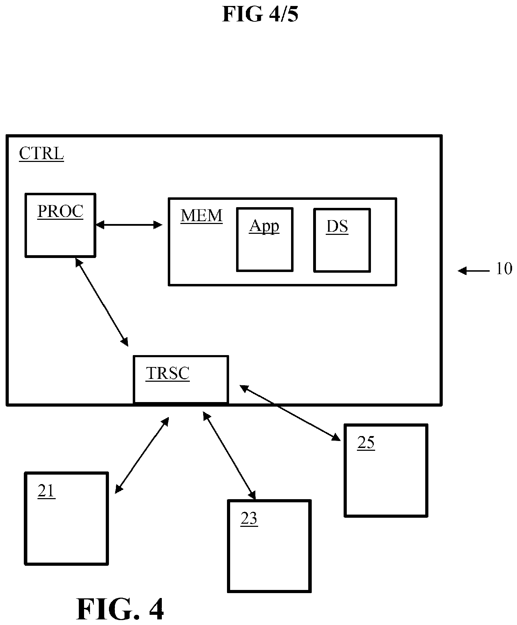

Figure 4 is a block diagram of an exemplary embodiment of a controller 10 that can be utilized in the first and second exemplary embodiments of the apparatus 1 to control the purification of water and providing of electrolyzer water for hydrogen production.

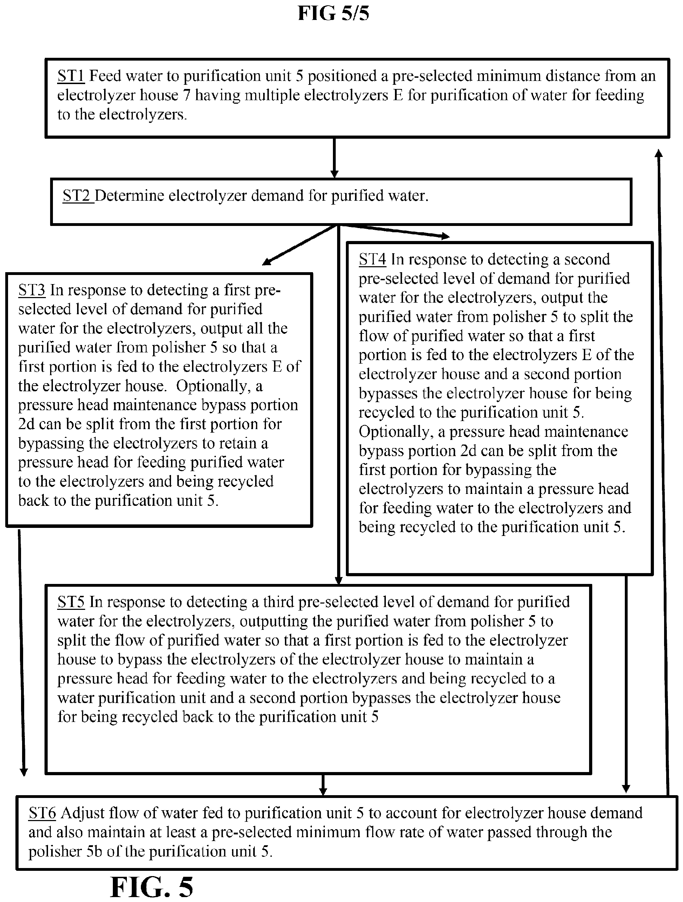

Figure 5 is a flow chart of an exemplary process for controlling the providing of purified water for hydrogen production. Exemplary embodiments of the electrolyzer assembly with water purification units 9 can be adapted to facilitate performance of this first exemplary process shown in Figure 5.

Referring to Figures 1-5, an apparatus 1 for controlling the purifying and providing of water to electrolyzers for hydrogen production can include a water demineralization unit 3 that can demineralize water for providing hydrogen production water feed streams to multiple different electrolyzer assembly with water purification units 9. Each electrolyzer assembly with water purification unit 9 can include a purification unit 5 that includes a deionization unit (DI) 5a and a polisher 5b. The deionization unit DI can be an electro-deionization (EDI) unit or other type of deionization device for deionizing the demineralized water received from the water demineralization unit 3 *via* a demineralized water feed conduit 2a positioned between the water demineralization unit 3 and the purification unit 5. The deionized water output from the deionization unit 5a can be fed to the polisher 5b for purifying the water for feeding to the electrolyzers E of an electrolyzer house 7. A polisher feed conduit can be positioned between the deionization unit 5a and the polisher 5b so deionized water output from the deionization unit 5a can be passed to the polisher 5b for purification *via* the polisher 5b.

The polisher 5b can include one or more beds of water purification material for adsorbing impurities from the water to form a purified water stream 2b that is comprised of liquid water at a pre-selected purity content. The pre-selected purity content can be within a pre-selected water purity content threshold that can be suitable for use as a feed to electrolyzers E for the formation of hydrogen *via* electrolysis. For example, the purified water stream 2b output by the polisher 5b can be a stream of liquid water that is ultra-pure water (or may also be called ultrapure water). Ultra-pure water can also be considered a type 1 water that can reach a theoretical ideal level of purity with a resistivity of 18.2 Mega Ohms (MΩ).

The purified water stream 2b can be fed to an electrolyzer house 7 (EH) that includes one or more electrolyzers E. The purified water stream 2b can be passed through a purified water stream output conduit positioned between the polisher 5b and the electrolyzer house 7 for feeding the purified water stream toward the electrolyzer house 7. The purified water can be passed from the purified water stream output conduit to an electrolyzer house feed conduit 2c for being fed to one or more electrolyzers E of the electrolyzer house 7. The portion of the purified water stream 2b output from the polisher that is fed to the electrolyzer house 7 can be considered a first portion of the purified water stream 2b. This first portion can be primarily routed to the electrolyzer house for feeding purified water to the electrolyzers E to meet purified water demand for electrolysis and hydrogen production performed *via* the electrolyzers.

Any portion of the purified water passed through the electrolyzer house feed conduit 2c without being routed to an electrolyzer E can include a pressure head maintenance bypass portion 2d of the purified water stream 2b that can bypass the electrolyzers E of the electrolyzer house 7 to maintain a pressure head for feeding water to the electrolyzers E and be recycled back to the water purification unit 5 *via* a recycle conduit 2r positioned between the electrolyzer house 7 and the purification unit 5. A pressure head maintenance bypass conduit can be connected between the recycle conduit 2r and the electrolyzer house feed conduit 2c to provide this pressure head maintenance bypass portion 2d to the recycle conduit 2r for recycling after this portion has bypassed the electrolyzers E.

A control valve V can be connected between the electrolyzer house feed conduit 2c and the recycle conduit 2r. The control valve V for the pressure head maintenance bypass portion 2d can be considered a pressure head maintenance bypass portion control valve V or a first control valve V in some arrangements. This valve can be adjusted between open and closed positions to facilitate the formation of the pressure head maintenance bypass portion 2d of the purified water stream and recycling of this portion of the stream to the purification unit 5 *via* the recycle conduit 2r. The control valve V can have numerous different positions between its open position and closed position for adjusting a flow rate of the purified water that is passed through the passed through the electrolyzer house feed conduit 2c to bypass the electrolyzers for maintenance of the pressure head and subsequent recycling to the purification unit 5 *via* the recycle conduit 2r.

The recycle conduit 2r can be positioned so that purified water can be recycled back to the deionization unit 5a or the polisher 5b of the purification unit 5. For instance, in some arrangements, the purified water can be recycled back to the polisher 5b so that the purified recycled water can avoid having to be further treated by the deionization unit 5a in the recycling process. In other arrangements, the purified water can be recycled back to the deionization unit 5a to undergo further deionization before it is again fed to the polisher 5b for further purification and subsequently being output from the polisher 5b for being fed toward the electrolyzer house 7.

The control valve V for the recycling of the pressure head maintenance bypass portion 2d can be communicatively connected to a controller 10 so that the controller 10 can provide control signals for adjusting the control valve between its open and closed positions (*e.g.,* adjusting the valve from open to close positions or between any of its intermediate positions between being fully open or entirely closed). The controller 10 can communicate with this control valve to actuate adjustment of the valve to control the flow rate of purified water passing through the valve V and through the recycle conduit 2d.

The recycle conduit 2r can be positioned between the polisher 5b and the electrolyzer house 7 so the purified water output from the polisher 5b that is fed to the recycle conduit 2r can be recycled back to the purification unit 5 (*e.g.,* polisher 5b or deionization unit 5a). For example, the recycle conduit 2r can be connected to the purified water stream output conduit for receiving a second portion of the purified water stream 2b that can be split from this steam. For example, the splitting of this purified water stream 2b can occur after the purified water is output from the polisher 5b, for example. As another example, it is contemplated that the splitting of the first and second portions of the purified water stream 2b formed by the polisher 5b can at the polisher 5b (*e.g.,* by utilization of multiple outlets of the polisher 5b or other splitting conduit arrangement positioned at the polisher 5).

A control valve V can be positioned in the recycle conduit or can be positioned between an inlet of the recycle conduit 2r and an inlet of the electrolyzer house feed conduit 2c. This control valve can be considered a recycle conduit control valve V or a second control valve V. This control valve V can be connected to the polisher 5b for routing the purified water stream 2b to the electrolyzer house 7 and/or back to the purification unit 5 (*e.g.,* to polisher 5b or deionization unit 5a) and can be adjusted between open and closed positions.

The controller 10 can be communicatively connected to the control valve V of the recycle conduit 2r to actuate adjustment of the position of this valve between its open and closed positions to adjust the flow rate of water being passed through the recycle conduit 2r. The control valve V can have numerous different positions between its open and closed positions for adjusting and/or controlling the flow rate of the purified water passed through the recycle conduit 2r to adjust a flow rate of purified water that is fed toward the electrolyzer house 7 and/or electrolyzers E.

In some configurations, the control valve V for the recycling of the pressure head maintenance bypass portion 2d shown in broken line in Figure 1 may not be needed. In such an implementation where there is no need to form a pressure head maintenance bypass portion 2d for recycling back to the purification unit 5, the control valve V for the recycling of that portion may not be needed. In such implementations where such a control valve is not needed, the control valve V of the recycle conduit 2r can be considered a first control valve.

In some configurations, the purification unit 5 can be positioned so it is a pre-selected minimum distance from the electrolyzer house 7. Such a position can be selected so that the polisher 5b and deionization unit 5a are substantially close to the electrolyzer house 7 and relatively remote from the water demineralization unit 3 (*e.g.,* the purification unit 5 is positioned closer to the electrolyzer house 7 as compared to the more remote water demineralization unit 3). For example, embodiments can be configured so that at least 60%, at least 70% or between 70% and 80% (*e.g.,* from 70% to 80%) of the overall conduit piping distance for feeding water from the water demineralization unit 3 to the electrolyzer house 7 is between the purification unit 5 and the water demineralization unit 3 and the remaining 40% to 20% of the piping distance is between the purification unit 5 and the electrolyzers E of the electrolyzer house 7 for the supply of water to the electrolyzers E.

In some implementations of the apparatus 1, the piping for the conduit arrangement for feeding water from the water demineralization unit 3 to the electrolyzer house 7 can be provided so that there is 4 times more piping distance between the purification unit 5 and the water demineralization unit 3 as compared to the piping distance between the purification unit 5 and the electrolyzer house 7. In other implementations of the apparatus 1, the piping can be provided so that there is a ratio of between 4:1 and 3:2 (*e.g.,* in a range from 4:1 to 3:2) of piping distance between the purification unit 5 and the water demineralization unit 3 as compared to the piping distance between the purification unit 5 and the electrolyzer house 7. As a non-limiting example, 1,600 meters of piping can be between the purification unit 5 and the water demineralization unit 3 to feed water from the demineralization unit 3 to the purification unit 5 and 400 meters of piping can be between the purification unit 5 and the electrolyzer house 7 for providing purified water from the polisher 5b to the electrolyzer house 7 to provide a ratio of 4:1 of piping distance between the purification unit 5 and the water demineralization unit 3 as compared to the piping distance between the purification unit 5 and the electrolyzer house 7. As another non-limiting example, 500 meters of piping can be between the purification unit 5 and the water demineralization unit 3 to feed water from the demineralization unit 3 to the purification unit 5 and 333.33 meters of piping can be between the purification unit 5 and the electrolyzer house 7 for providing purified water from the purification unit 5 to the electrolyzer house 7 to provide a ratio of 3:2 of piping distance between the purification unit 5and the water demineralization unit 3 as compared to the piping distance between the purification unit 5 and the electrolyzer house 7.

This type of positioning for the purification unit 5 can also facilitate use of different types of piping for the transport of the water from the demineralization unit 3 to the purification unit 5 and between the purification unit 5 and the electrolyzer house 7. For example, a first piping 4 having a first pre-selected quality level for the water having a first preselected level of purity can be utilized for the transport of the water from the demineralization unit 3 to the purification unit 5. This type of piping can be, for example, stainless steel piping, grade 316 stainless steel, or other type of suitable piping for transporting demineralized water of a first pre-selected quality level to a purification unit for purification to a second pre-selected purification level.

The first pre-selected level of purity, or first pre-selected purification level of water output from the demineralization unit 3 can be water that has been demineralized to a suitable level for feeding to polisher 5b or a deionization unit 5a for further purification. For example, demineralized water of the first pre-selected level of purity, or first pre-selected purification level of water, can be treated so that the number of dissolved solids in the water is at or below 10 mg/l or other suitable concentration of mineral content and/or dissolved solids.

The second pre-selected level of purity, or second pre-selected purification level, can be a pre-selected purity content within a pre-selected water purity content threshold that can be suitable for use as a feed to electrolyzers E for the formation of hydrogen *via* electrolysis. For example, the purified water stream 2b output by the polisher 5b can be a stream of liquid water that is ultra-pure water (or may also be called ultrapure water). Ultra-pure water can also be considered a type 1 water that can reach a theoretical ideal level of purity with a resistivity of 18.2 Mega Ohms (MΩ).

The purified water output at the second pre-selected level of purity, or second pre-selected purification level, can be transported to the electrolyzer house 7 and/or recycled back to the purification unit 5 as discussed above *via* a second piping 6 that has a second pre-selected quality level. The second piping 6 can be, for example, glass reinforced plastic lined polypropylene piping that is able to avoid ionization of the water and also avoid introducing impurities into the water as it is passed through the second piping 6 to the electrolyzer house 7. In some arrangements, the recycle conduit 2r can also include the second piping 6. In other arrangements, the recycle conduit 2r can utilize the lower quality and lower cost first piping 4 (*e.g.,* a stainless steel piping, *etc.).*

In some configurations, the recycle conduit 2r can be positioned and arranged utilizing the lower cost first piping to recycle water back to the demineralization unit 3 instead of the purification unit 5. In such a configuration, the recycled water can be routed *via* the lower cost first piping 4 *via* the recycle conduit 2r. In this type of demineralization unit recycle conduit configuration 23 (shown in broken line in Figure 1), the recycle conduit 2r can be positioned between the purification unit 5, electrolyzer house 7, and the water demineralization unit 3 to facilitate the recycling of water output from the purification unit back to the demineralization unit 3 for subsequent feeding back to the purification unit 5.

A sensor S can be positioned to detect or monitor a flow rate of water fed to the purification unit 5. The sensor can be considered a purification unit sensor S or a first sensor S that is positioned to detect the flow rate or water feed velocity of water fed to the polisher 5b of the purification unit 5, for example. This sensor can be communicatively connected to a controller 10 (CTRL). The controller 10 can be configured to receive data from the sensor concerning the water feed rate or water feed velocity of water fed to the polisher 5b generated by the first sensor.

A sensor S can also be positioned to detect or monitor a flow rate of purified water fed to the electrolyzer house 7 for being fed to the electrolyzers E. The sensor can be considered a sensor S of the electrolyzer house feed conduit 2c or a second sensor S that is positioned to detect the flow rate or water feed velocity of purified water fed to the electrolyzers E of the electrolyzer house 7, for example. This sensor S can be communicatively connected to a controller 10 (CTRL). The controller 10 can be configured to receive data from the sensor S of the electrolyzer house feed conduit 2c concerning the water feed rate or water feed velocity generated by the sensor.

A sensor S can also be positioned to detect or monitor a flow rate of purified water fed to the recycle conduit 2r for bypassing the electrolyzer house 7 and being recycled back to the purification unit 5 as discussed above. The sensor can be considered a sensor S of the recycle conduit 2r or a third sensor S that is positioned to detect the flow rate or water feed velocity of purified water fed to the recycle conduit 2r for bypassing the electrolyzers E, for example. This sensor S can be communicatively connected to a controller 10 (CTRL). The controller 10 can be configured to receive data from the sensor S of the recycle conduit 2r concerning the purified water feed rate or purified water feed velocity generated by the sensor.

Yet another sensor S can also be positioned to detect or monitor a flow rate of purified water fed to the recycle conduit 2r as the pressure head maintenance bypass portion 2d for bypassing the electrolyzers E and being recycled back to the purification unit 5 as discussed above. The sensor can be considered a pressure head maintenance bypass sensor S or a fourth sensor S that is positioned to detect the flow rate or water feed velocity of purified water fed to the recycle conduit 2r as the pressure head maintenance bypass portion 2d for bypassing the electrolyzers E, for example. This sensor S can be communicatively connected to a controller 10 (CTRL). The controller 10 can be configured to receive data from the sensor S for the pressure head maintenance bypass portion 2d concerning the purified water feed rate or purified water feed velocity generated by the sensor.

Each electrolyzer assembly with water purification unit 9 can include a purified water control system. The purified water control system can include the sensors S, the controller 10, the valves V and related conduits and process units (*e.g.,* polisher 5b, recycle conduit 2r, *etc.*) or can be considered to only include the sensors S and the controller 10. The water purification control system can be configured to determine a demand for purified water at the electrolyzers E of the electrolyzer house 7 and adjust a proportion of the purified feed of water output from the polisher 5b that is included in the first portion of the purified feed of water that is feedable to the electrolyzers E and adjust a proportion of the purified feed of water output from the polisher 5b that is included in the second portion of the purified feed of water to bypass the electrolyzers E and be recycled to the water purification unit 5 so that a flow of water passed through the polisher 5b is at or above a pre-selected minimum flow and the flow of water passed through the polisher 5b is at or below a pre-selected maximum flow. The pre-selected minimum flow can be any suitable flow (*e.g.,* a flow of water at which the velocity of water is 0.6 m/s) and the pre-selected maximum flow can be any suitable flow (*e.g.,* a flow of water at which the velocity of water is 3.5 m/s or 4 m/s) that can meet a pre-selected set of design criteria and also help prevent polisher bed degradation.

The apparatus 1 can include multiple different electrolyzer assembly with water purification units 9. For example, an apparatus can include at least two such units as may be appreciated from the exemplary embodiment of Figure 1 or can include at least five such units as may be appreciated from the exemplary embodiment of Figure 2. Other embodiments can utilize less than 5 and/or more than 2 electrolyzer assembly with water purification units 9. Yet other embodiments can utilize more than 5 electrolyzer assembly with water purification units 9.

In embodiments in which there can be multiple different electrolyzer assembly with water purification units 9, a first electrolyzer assembly with water purification unit 9 can include a first purification unit 5 having a first polisher 5b and a first deionization unit 5a, a first electrolyzer house 7 with multiple first electrolyzers E, a first recycle conduit 2r, and other related elements (*e.g.,* first electrolyzer house feed conduit 2c, *etc*.) as discussed above. The second electrolyzer assembly with water purification unit 9 (*e.g.,* as shown in the exemplary embodiment of Figure 1) can include a second purification unit 5 positioned to purify a second feed of water 2a from the water demineralization unit 3 for outputting a second purified feed of water 2b having the pre-selected level of purity for feeding to second electrolyzers E of a second electrolyzer house 7 for generation of hydrogen *via* electrolysis as well. The second purification unit 5 can be positioned and arranged such that a first portion of the second purified feed of water outputtable from the second purification unit 5 is feedable to the second electrolyzers E *via* a second electrolyzer house feed conduit 2c and a second portion of the second purified feed of water is outputtable to a second recycle conduit 2r to bypass the second electrolyzer house 7 and feed the second portion of the second purified feed of water to the second water purification unit 5. The second electrolyzer assembly with water purification unit 9 can also include second sensors S, second control valves V, and a second controller 10 adapted and configured similar to the controller 10, valves V, and sensors S discussed above. It should also be appreciated that additional electrolyzer assembly with water purification units 9 (when included) can include additional such elements as well.

Figure 4 illustrates an exemplary embodiment of the controller 10. The controller (CTRL) can include hardware. The hardware of the controller can include a processor (PROC) that is communicatively connected to a non-transitory memory (MEM) and a transceiver (TRSC) that includes at least one receiver and at least one transmitter for communicative connections with the sensors S and valves V. At least one application (App) and/or data store (DS) can be stored on the memory (*e.g.,* flash memory, hard drive, solid state drive, or other type of non-transitory memory). Code of the application (App) can be run by the processor to define a process for providing purified water for hydrogen production that the controller 10 can oversee and/or implement *via* communications with the sensors S, valves V and/or other process elements of the apparatus 1. Embodiment of the process for providing purified water for hydrogen production can be or include a purified water control scheme defined by the code of the application run by the processor of the controller 10. The code may be defined so that the processor of the controller calls on one or more data stores that are stored on memory of the controller 10 and/or on memory that is communicatively connected to the controller (*e.g.,* remote database, *etc.*) when the application is executed by the processor running the application.

The controller 10 can be communicatively connected to at least one input device 21, at least one output device 23 and/or at least one input/output device 25. Examples of an input device can include, for example, sensors S or devices that can communicatively connect to the controller 10 so a user can provide input to the controller 10 (*e.g.,* a keypad, a microphone, a pointer device, a laptop computer, a tablet, a smart phone, *etc*.)*.* Examples of an input/output device 25 can include devices that may provide data to the controller and also output data received from the controller such as, for example, a printer, a touch screen display, a laptop computer, a smartphone, or other type of input/output device. The at least one output device 23 can include at least one speaker, a display, a printer, or other type of output device. In some embodiments, the controller 10 can be a component of an automated process control system or a distributed control system (DCS) of the apparatus 1.

Embodiments of the apparatus 1 can utilize a process for controlling the purifying and providing of electrolyzer water for hydrogen production. An example of such a process can be appreciated from Figure 3. For example, in a first step STP1, water form a demineralization unit 3 can be fed to multiple different purification units 5 of different electrolyzer assemblies with water purification units 9. The water fed to the purification units 5 can be purified as discussed above. First piping 4 having a first pre-selected quality level for the water having a first pre-selected level of purity can be utilized for passing the water from the demineralization unit 3 to the different purification units 5 as discussed above, for example.

In a second step STP2, the purified water output from the purification units 5 (e.g., the polishers 5b of the purification units 5) can have a second pre-selected purity level and be fed to the electrolyzer houses 7 utilizing second piping 6 having the second pre-selected quality level. The feeding of the purified water having the second pre-selected level of purity can be controlled to account for a determined electrolyzer water demand of the electrolyzers of the electrolyzer houses. For example, a portion of the purified water having the second pre-selected level of purity that is output from the purification units 5 can be recycled to the purification units *via* recycle conduits 2r in a third step STP3 to account for the determined demand for electrolyzer water as discussed above. The piping for the recycling of the recycled purified water can be piping of the first pre-selected quality level or the second pre-selected quality level.

An exemplary embodiment of operation of the apparatus 1 that can be monitored and/or controlled by the controllers 10 of the purified water control systems of the different electrolyzer assemblies with water purification units 9 of the apparatus as can be appreciated from the exemplary embodiment of the process for controlling the providing of purified water illustrated in Figure 5. Embodiments of the apparatus 1 and embodiments of the purified water control system can be configured to perform the exemplary process shown in Figure 5, for example.

In a first step ST1, water from the demineralization unit 3 can be fed to the purification unit 5, which can be positioned a pre-selected minimum distance from the electrolyzer house 7 as discussed above. In a second step ST2, electrolyzer demand for water for the electrolyzer(s) E of the electrolyzer house 7 can be determined. The determination of electrolyzer water demand that can be used to select one of various different purified water flow control options. This determination of demand can be based on data concerning (i) loading feedback from the electrolyzers E, (ii) a flow rate or velocity of purified water detected by the sensor S of the recycle conduit 2r (*e.g.,* sensor detecting flow passing through valve V between the recycle conduit 2r, the electrolyzer house feed conduit 2c and the purified water stream output conduit), (iii) a flow rate or velocity of purified water being fed to the polisher 5b detected by the purification unit feed sensor S, (iv) a flow rate or velocity of purified water being passed through recycle conduit 2d as the pressure head maintenance bypass portion 2d (*e.g.,* a sensor at the pressure head maintenance bypass portion valve V of the recycle conduit 2d or other selected location), and/or (v) a flow rate or velocity of purified water being passed through the electrolyzer house feed conduit 2c for feeding to the electrolyzers E detected by the electrolyzer house feed conduit sensor. The determination on demand for electrolyzer water can also be based on other factors. For example, the electrolyzer demand can also be determined based on piping size changes within a header of the electrolyzer house feed conduit 2c in situations where the header of the electrolyzer house feed conduit 2c can be incrementally reduced in size in order to keep an entire length of this conduit within the pre-selected minimum and pre-selected maximum water velocity criteria as flow in the common section of the header can be reduced as electrolyzer feed conduits of the electrolyzer house feed conduit 2c can branch off from the header for feeding different electrolyzers of the electrolyzer house 7. The controller 10 can be configured to make the electrolyzer water demand determination and provide instructions or data to other process elements to adjust water flows to account for the determined water demand.

The loading feedback from the electrolyzers E can be provided *via* one or more sensors, detectors, or other elements of the electrolyzers E and/or electrolyzer house 7. This data can be communicated to the controller 10 *via* one or more communicative connections the controller 10 can have with such elements. The data can include detected velocity data, flow rate data, or other data that can correspond to a water velocity or water flow rate.

For example, if a first pre-selected level of demand for water for the electrolyzers E is detected, a first portion of the purified water output from the polisher 5b (*e.g.,* purified water stream 2b) can be fed to the electrolyzer house feed conduit 2c for being fed to the electrolyzers E of the electrolyzer house 7 in a third step ST3 of the process. This first portion can be an entirety of the purified water output from the polisher 5b when the first pre-selected level of demand for water is detected.

The first pre-selected level of demand for water can be considered a high demand for water. Such a condition can occur, for example, when the electrolyzers E are operating at full capacity and available power for powering operation of the electrolyzers E is fully available. In response to detection of the first-preselected level of demand for water, the valve V of the recycle conduit 2r can be fully closed so that no purified water passes through that valve. During this third step ST3, a pressure head maintenance bypass portion 2d of the purified water can optionally be split from the first portion for bypassing the electrolyzers E to maintain a pressure head for feeding water to the electrolyzers and being recycled back to the water demineralization unit *via* the recycle conduit 2d and the pressure head maintenance bypass portion valve V. This can occur for an entirety of the duration of the time that the first pre-selected level of demand for water is detected or for only a sub-part of that time period.

As another example, if a second pre-selected level of demand for water for the electrolyzers E is detected, the purified water stream 2b can be split into a first portion and a second portion so that a first portion of the purified water output from the polisher 5b (*e.g.,* purified water stream 2b) can be fed to the electrolyzer house feed conduit 2c for being fed to the electrolyzers E of the electrolyzer house 7 in a fourth step ST4 of the process. The second portion of the purified water can be fed to the recycle conduit 2r to bypass the electrolyzer house for being recycled to the water purification unit 5 as discussed above. During this fourth step ST4, a pressure head maintenance bypass portion 2d of the purified water can optionally be split from the first portion of the purified water for bypassing the electrolyzers E to maintain a pressure head for feeding water to the electrolyzers and being recycled back to the water purification unit 5 *via* the pressure head maintenance bypass portion valve V and the recycle conduit 2r. This can occur for an entirety of the duration of the time that the second pre-selected level of demand for water is detected or for only a sub-part of that time period.

The second pre-selected level of demand for water can be considered an intermediate demand for water. Such a condition can occur, for example, when the electrolyzers E are operating at non-full capacity and available power for powering operation of the electrolyzers E may only be intermittently available. Such an intermediate demand condition can also be detected for other operational conditions. The second pre-selected level of demand can be between a high demand as defined by the first preselected level of demand and a low level of demand that can be defined as a third pre-selected level of demand.

As another example, if a third pre-selected level of demand for water for the electrolyzers E is detected, the purified water stream 2b can be split into a first portion and a second portion so that a first portion of the purified water output from the polisher 5b (*e.g.,* purified water stream 2b) can be fed to the electrolyzer house feed conduit 2c for bypassing the electrolyzers E of the electrolyzer house 7 to maintain a pressure head for feeding water to the electrolyzers and being recycled to the water purification unit 5 *via* the recycle conduit 2r and pressure head maintenance bypass portion valve V of the recycle conduit 2r in a fifth step ST5 of the process. The second portion of the purified water can be fed to the recycle conduit 2r *via* the recycle conduit valve V to bypass the electrolyzer house 7 for being recycled to the water purification unit 5 as well during the fifth step ST5.

In a sixth step ST6, the flow of water fed from the water demineralization unit 3 to the polisher 5b can be adjusted to account for electrolyzer house demand and also maintain at least a pre-selected minimum flow rate of water or pre-selected minimum velocity of water passed through the polisher 5b. Such a pre-selected minimum flow rate or velocity can be determined to avoid polisher bed degradation. In some embodiments, the pre-selected minimum flow rate or velocity of water to be passed through the polisher 5b can be 0.6 m/s. The adjustment in the flow of water being fed to the polisher 5b can be adjusted to also avoid a pre-selected maximum flow rate or velocity of water. Such a pre-selected maximum flow rate or velocity of water can be between 4 m/s and 3.5 m/s (*e.g.,* in a range from 4 m/s to 3.5 m/s) or can be otherwise selected to avoid a flow rate of water passing through the polisher 5b exceeding a rate that would be detrimental to the piping utilized to transport the water (*e.g.,* by inducing too high of a stress on the piping that may contribute to piping damage, leaks, or other problems). The pre-selected maximum flow rate can also be selected to account for other conditions that can affect performance of the apparatus and/or the operational flow design of the apparatus.

The controller 10 can oversee performance of an embodiment of the process based on the sensor data and other data as noted above. Also, the adjustment in flow of water made in step ST6 can result in the process returning to step ST1 as the feeding of water to the polisher 5b can change and the changed feeding of the water can re-start the operational cycle of the method. The method may then proceed back to the first and second steps and one of the third step, fourth step, or fifth steps as may be needed to account for the determined demand of purified water and a subsequent adjustment of the flow of water that may subsequently occur or occur at the same time the third, fourth or fifth steps are performed.

It should be appreciated that the above noted third step ST3, fourth step ST4 or fifth step ST5 may be performed in conjunction with the sixth step ST6 based on the determination made in the second step ST2. Also, the exemplary embodiment of the process shown in Figure 5 can be performed in a continuous or semi-continuous type state (*e.g.,* continuously at pre-defined time intervals) in some embodiments.

Below is an exemplary description that further illustrates a non-limiting example of how the process control scheme monitored and/or performed by the controller 10 can be employed over the course of multiple cycles of operation of the defined processing scheme to account for different demands of purified water for the electrolyzers E that may be detected over a period of time of operation.

For example, an initial demand for water can be determined in step ST2 as being a first pre-selected level and a suitable routing of purified water of the third step ST3 can be made as well as a suitable adjustment to the flow of water in step ST6 that can result in a feed of water fed to the polisher 5b being adjusted in step ST1. The controller 10 can subsequently determine that the electrolyzer demand for water has changed from a first pre-selected level to a second pre-selected level in step ST2 and subsequently step ST4 can be performed instead of step ST3 so that the routing of purified water is adjusted from being entirely fed toward the electrolyzer house to being partially fed to the electrolyzer house 7 with a bypass portion being split to the recycle conduit 2r for bypassing the electrolyzer house and being recycled to the water purification unit 5. The extent of bypassing (*e.g.,* the proportion of the second portion of the stream of purified water 2b being routed to bypass the electrolyzer house for recycling to the water purification unit 5) can be based on the particular level of demand that is detected as being an intermediate level of demand. The flow of water being fed to the polisher 5b can also be adjusted as noted in step ST6 to account for this change in demand as well.

Thereafter, the flow of water fed to the polisher 5b can occur at the adjusted flow rate and the controller 10 can subsequently determine that the electrolyzer demand for water has changed yet again from the second pre-selected level to a third pre-selected level in step ST2 and subsequently step ST5 can be performed instead of step ST4 such that the routing of purified water is adjusted so the water is being entirely recycled back to the water purification unit 5. The flow of water being fed to the polisher 5b can also be adjusted as noted in step ST6 to account for this change in demand as well.

Thereafter, the flow of water fed to the polisher 5b can occur at the adjusted flow rate and the controller 10 can subsequently determine that the electrolyzer demand for water has changed yet again from the third pre-selected level to the second pre-selected level in step ST2 and subsequently step ST4 can be performed instead of step ST5 such that the routing of purified water is adjusted from being entirely recycled back to the water purification unit 5. The flow of water being fed to the polisher 5b can also be adjusted as noted in step ST6 to account for this change in demand as well.

Thereafter, the flow of water fed to the polisher 5b can occur at the adjusted flow rate and the controller 10 can subsequently determine that the electrolyzer demand for water has changed yet again from the second pre-selected level to a third pre-selected level in step ST2 and subsequently step ST5 can be performed instead of step ST4 such that the routing of purified water is adjusted so the water is being entirely recycled back to the water purification unit 5. The flow of water being fed to the polisher 5b can also be adjusted as noted in step ST6 to account for this change in demand as well.

Thereafter, the flow of water fed to the polisher 5b can occur at the adjusted flow rate and the controller 10 can subsequently determine that the electrolyzer demand for water has changed yet again from the third pre-selected level to the first pre-selected level in step ST2 and subsequently step ST3 can be performed instead of step ST5 such that the routing of purified water is adjusted so the water is being entirely fed toward the electrolyzer house 7 *via* the electrolyzer house feed conduit 2c. The flow of water being fed to the polisher 5b can also be adjusted as noted in step ST6 to account for this change in demand as well.

As noted above, the cycles of this process can be repeated numerous other times as well and vary between the different routing of purified water options of steps ST3, ST4 and ST5 to account for changes in the determined electrolyzer demand for water.

It should also be appreciated that there can be steps in addition to steps ST3, ST4 and ST5 to account for additional pre-selected levels of demand for electrolyzer water. For example, there can be multiple different intermediate demand conditions (*e.g.,* multiple different per-selected discrete levels of intermediate demand or a large number of different pre-selected levels to account for various levels of demand for electrolyzer water that can be presented between a lowest demand for water condition of the third pre-selected level of demand and a highest level of demand for water condition of the first pre-selected level of demand. The different intermediate pre-defined levels of demand can be defined so that a proportion of the purified feed of water output from the polisher 5b that is included in the first portion of the purified feed of water that is feedable to the electrolyzers E can be adjusted as well as a proportion of the purified feed of water output from the polisher 5b that is included in the second portion of the purified feed of water to bypass the electrolyzers E and be recycled to the water purification unit 5 can be adjusted so that a flow of water passed through the polisher 5b is at or above a pre-selected minimum flow and the flow of water passed through the polisher 5b is at or below a pre-selected maximum flow while also providing sufficient purified water to the electrolyzers E to meet the demand the electrolyzers have for purified water for formation of hydrogen *via* electrolysis.

The process can also include additional steps. For example, the process can include retrofitting an embodiment of the apparatus 1 or an embodiment of the water purification control system. The process can also include using the water fed to the electrolyzers E to form hydrogen *via* electrolysis by use of renewable energy to help power or entirely power operation of the electrolyzers E.

Embodiments of the apparatus 1 can be configured so that the water demineralization unit 3 is a centralized unit that supplies water to a number of different electrolyzer assemblies with water purification units 9. In such a configuration, there can be a water purification control system for each electrolyzer assembly with water purification unit 9 that can also be configured to utilize an embodiment of the process for providing purified water (*e.g.,* the exemplary embodiment of the process shown in Figure 5).

Embodiments of our apparatus, system, and process can provide significant improvements in operational flexibility, significantly improved profitability by reducing capital costs for providing purified water for use in hydrogen production, and also provide maintenance and safety benefits associated with implementation and operation. For example, embodiments can operate without a continual recycle of purified water, which can reduce pumping and processing requirements on a demineralization unit and can also permit a demineralization unit to have a smaller size. Process control for the embodiments can also provide operational improvements by permitting flow adjustments based on more accurate calculations that can account for electrolyzer demand flow changing significantly at the electrolyzers (*e.g.,* wide operational adjustments of between operating at 0% capacity to 100% capacity, *etc.*). Further, embodiments can be adapted to improve the environmental impact that hydrogen production processes may have by maintaining a minimum flow of fluid passing through one or more polishers to avoid polisher bed agglomeration that can inhibit purification processing or require other maintenance and/or avoid channeling that can be formed in the polisher bed that can inhibit purification processing or require other maintenance. As yet another example, embodiments can be adapted to permit different piping to be utilized to help reduce the amount of high cost, high-quality piping needed for electrolyzer water having suitable purity for undergoing electrolysis for hydrogen production, which can significantly reduce capital costs and maintenance costs and allow sourcing and purchase for the piping to occur more effectively as well as provide for easier and simpler installation. Also, embodiments can be designed to provide a reduced risk of water contamination for purified water being fed to the electrolyzers.

It should be appreciated that modifications to the embodiments explicitly shown and discussed herein can be made to meet a particular set of design objectives or a particular set of design criteria. For instance, the arrangement of valves, piping, and other conduit elements (*e.g.,* conduit connection mechanisms, tubing, seals, *etc*.) for interconnecting different units of the plant for fluid communication of the flows of fluid between different elements (*e.g.,* pumps, conduits, valves, *etc.*) can be arranged to meet a particular plant layout design that accounts for available area of the plant, sized equipment of the plant, and other design considerations. As another example, the flow rate, pressure, and temperature of the fluid passed through the various apparatus or system elements can vary to account for different design configurations and other design criteria.

Embodiments of a plant, the apparatus for controlling the providing of purified water for hydrogen production, process for controlling the providing purified water for hydrogen production, and/or system for controlling the providing of purified water for hydrogen production can each be configured to include process control elements positioned and configured to monitor and control operations (*e.g.*, temperature and pressure sensors, flow sensors, an automated process control system having at least one work station that includes a processor, non-transitory memory and at least one transceiver for communications with the sensor elements, valves, and controllers for providing a user interface for an automated process control system that may be run at the work station and/or another computer device of the plant, *etc.*)*.*

As another example, it is contemplated that a particular feature described, either individually or as part of an embodiment, can be combined with other individually described features, or parts of other embodiments. The elements and acts of the various embodiments described herein can therefore be combined to provide further embodiments. Thus, while certain exemplary embodiments of the process, apparatus, system and methods of making and using the same have been shown and described above, it is to be distinctly understood that the invention is not limited thereto but may be otherwise variously embodied and practiced within the scope of the following claims.

## Claims

1. An apparatus for controlling purified water for hydrogen production comprising:
a water purification unit positioned to purify a feed of water from a water demineralization unit for outputting a purified feed of water having a pre-selected level of purity for feeding to electrolyzers of an electrolyzer house for generation of hydrogen *via* electrolysis;
the water purification unit positioned and arranged such that a first portion of the purified feed of water outputtable from the water purification unit is feedable to the electrolyzers and a second portion of the purified feed of water is outputtable to a recycle conduit to bypass the electrolyzer house and feed the second portion of the purified feed of water to the water purification unit; and
a water purification control system configured to determine a demand for purified water at the electrolyzers and adjust a proportion of the purified feed of water output from the water purification unit that is included in the first portion of the purified feed of water and adjust a proportion of the purified feed of water output from the water purification unit that is included in the second portion of the purified feed of water so sufficient purified water is fed to the electrolyzers to meet the determined demand for the purified water,
wherein the water purification unit optionally comprises a deionization unit positioned to deionize the feed of water and a polisher that is downstream of the deionization unit to receive deionized water from the deionization unit to form the purified water having the pre-selected level of purity.

2. An apparatus according to Claim 1 wherein the water purification unit comprises the deionization unit and the polisher, said apparatus comprising:
an electrolyzer house feed conduit connected between the electrolyzers and the polisher to receive the first portion of the purified feed of water; and
a recycle conduit connected between the water purification unit and the electrolyzer house to receive the second portion of the purified feed of water to bypass the electrolyzer house and feed the second portion to the water purification unit.

3. An apparatus according to Claim 1 or Claim 2 wherein the water purification unit comprises the deionization unit and the polisher, said apparatus comprising:
a pressure head maintenance bypass conduit connected to the recycle conduit so that a portion of the first portion of the purified feed is passable to the water purification unit after bypassing the electrolyzers to maintain a pressure head for the electrolyzers.

4. An apparatus according to any of the preceding claims, wherein the water purification unit comprises the deionization unit and the polisher and wherein the water purification control system is configured so that a proportion of the purified feed of water output from the polisher that is included in the first portion of the purified feed of water and a proportion of the purified feed of water output from the polisher that is included in the second portion of the purified feed of water are adjusted so that a flow of water passed through the polisher is at or above a pre-selected minimum flow and the flow of water passed through the polisher is at or below a pre-selected maximum flow while also feeding sufficient purified water to the electrolyzers to meet the determined demand for the purified water.

5. An apparatus according to Claim 4, comprising:
an electrolyzer house feed conduit connected between the electrolyzers and the polisher to receive the first portion of the purified feed of water;
wherein the water purification control system includes:
a controller;
a sensor positioned to detect a flow rate or velocity of purified water fed to the electrolyzer house that is communicatively connectable to the controller;
a recycle conduit sensor positioned to detect a flow rate or velocity of purified water passed through the recycle conduit; and
a purification unit feed conduit sensor positioned to detect a flow rate or velocity of water fed to the purification unit for purification.

6. An apparatus according to any of the preceding claims, wherein the water purification unit comprises the deionization unit and the polisher and wherein the purification unit is positioned such that piping for feeding the water from the water demineralization unit to the electrolyzer house is arranged so that there is a ratio of between 4:1 and 3:2 of a piping distance between the water purification unit and the water demineralization unit as compared to a piping distance between the water purification unit and the electrolyzer house.

7. An apparatus according to Claim 6, wherein the piping between the water purification unit and the water demineralization unit is a first piping having a first pre-selected quality level and the piping between the water purification unit and the electrolyzer house for feeding the purified water to the electrolyzers is a second piping having a second pre-selected quality level.

8. An apparatus according to any of the preceding claims , wherein the water purification unit comprises the deionization unit and the polisher and wherein the water purification unit is a first water purification unit, the feed of water is a first feed of water, the purified feed of water is a first purified feed of water, the electrolyzers are first electrolyzers and the electrolyzer house is a first electrolyzer house, and the recycle conduit is a first recycle conduit, the apparatus also comprising:
a second water purification unit positioned to purify a second feed of water from the water demineralization unit for outputting a second purified feed of water having the pre-selected level of purity for feeding to second electrolyzers of a second electrolyzer house for generation of hydrogen *via* electrolysis; and
the second water purification unit positioned and arranged such that a first portion of the second purified feed of water outputtable from the second water purification unit is feedable to the second electrolyzers and a second portion of the second purified feed of water is outputtable to a second recycle conduit to bypass the second electrolyzer house and feed the second portion of the second purified feed of water to the second water purification unit.

9. A process to control providing of purified water for hydrogen production, the process comprising:
feeding water to a water purification unit for purification of the water to form purified water for feeding to electrolyzers of an electrolyzer house for formation of hydrogen from the purified water *via* electrolysis;
determining electrolyzer demand for the purified water so that:
in response to detection of a first pre-selected level of electrolyzer demand for the purified water, feeding an entirety of the purified water output from a polisher of the water purification unit to the electrolyzer house for feeding to the electrolyzers;
in response to detection of a second pre-selected level of electrolyzer demand for the purified water, feeding a first portion of the purified water output from the polisher to the electrolyzer house for feeding to the electrolyzers and feeding a second portion of the purified water output from the polisher to a recycle conduit to feed the purified water to the water purification unit; and
in response to detection of a third pre-selected level of electrolyzer demand for the purified water, passing the purified water output from the polisher to the water purification unit such that the purified water bypasses the electrolyzers.

10. A process according to Claim 9, wherein the passing of the purified water output from the polisher to the water purification unit such that the purified water bypasses the electrolyzers comprises:
passing at least a portion of the purified water output from the polisher to the recycle conduit to feed the purified water to the water purification unit.

11. A process according to Claim 9, wherein the passing of the purified water output from the polisher to the water purification unit such that the purified water bypasses the electrolyzers comprises:
passing a first portion of the purified water output from the polisher to an electrolyzer house feed conduit for maintaining a pressure head for feeding water to the electrolyzers and being recycled back to the water purification unit; and
passing a second portion of the purified water output from the polisher to recycle conduit to feed the second portion of the purified water to the purification unit.

12. A process according to any of Claims 9 to 11, wherein the determining of the electrolyzer demand for the purified water is based on one or more of: (i) loading feedback from the electrolyzers, (ii) a flow rate or velocity of purified water detected by a sensor of the recycle conduit, (iii) a flow rate or velocity of water being fed to the polisher detected by a water purification unit sensor, (iv) a flow rate or velocity of water being passed through an electrolyzer house feed conduit for feeding to the electrolyzers detected by an electrolyzer house feed conduit sensor, and (v) piping size changes within a header of the electrolyzer house feed conduit.

13. A process according to any of Claims 9 to 12, comprising:
adjusting a flow of water being fed to the polisher in response to the determined electrolyzer demand for the purified water.

14. A process to control providing electrolyzer water for hydrogen production, comprising:
feeding water having a first pre-selected level of purity from a water demineralization unit to a plurality of water purification units *via* first piping have a first pre-selected quality level for the water having the first pre-selected level of purity;
feeding purified water having a second pre-selected level of purity from the water purification units to electrolyzers of electrolyzer houses *via* second piping having a second pre-selected quality level for the purified water having the second pre-selected level of purity; and
controlling the feeding of the purified water having the second pre-selected level of purity to account for a determined electrolyzer water demand of the electrolyzers of the electrolyzer houses.

15. A process according to Claim 14, comprising:
recycling a portion of the purified water having the second pre-selected level of purity output from the purification units to the purification units *via* recycle conduit arrangements so that the recycled portion of the purified water bypasses the electrolyzers of the electrolyzer houses,
wherein the electrolyzers are optionally operated to form hydrogen from the purified water having the second pre-selected level of purity *via* electrolysis.
